# EUROPEAN PATENT APPLICATION

(11) **EP 4 439 075 A1**
(43) Date of publication of application: **02.10.2024**
(21) Application number: 22915869.6
(22) Date of filing: 21.12.2022
(51) Int. Cl.: G01N 35/10

(54) **CLEANING DEVICE, SAMPLE ANALYZING DEVICE, AND CLEANING METHOD**

(30) Priority: 28.12.2021 JP 2021213763
(71) Applicant: HORIBA, Ltd., Minami-ku Kyoto-shi Kyoto 601-8510 (JP)
(72) Inventor: IKEDA, Motohide, Kyoto-shi, Kyoto 601-8510 (JP); OSAWA, Kenta, Kyoto-shi, Kyoto 601-8510 (JP); OKU, Narihiro, Kyoto-shi, Kyoto 601-8510 (JP); MAEDA, Takuto, Kyoto-shi, Kyoto 601-8510 (JP); ISHII, Yuki, Kyoto-shi, Kyoto 601-8510 (JP)
(74) Representative: Isarpatent
(86) International application number: PCT/JP2022/047122
(87) International publication number: WO 2023/127646

(57) **Abstract**

A cleaning device that cleans a suction portion includes: a first passage portion inside which a suction tube for sucking a sample moves; a first cleaning solution supply passage and a cleaning solution discharge passage that intersect with the first passage portion; a hollow body that connects to the first passage portion in the movement direction of the suction tube and that has a second passage portion inside which the suction tube moves; and a wall portion having an inner side face that surrounds the outer side face of the hollow body across a gap. The suction portion includes the suction tube and the hollow body. The wall portion has a second cleaning solution supply passage that penetrates the inner side face. The cleaning device cleans at least one of the suction tube and the hollow body.

## Description

### Technical Field

The present invention relates to a cleaning device that cleans a suction portion, a sample analysis apparatus, and a cleaning method.

### Background Art

There are conventionally known sample analysis apparatuses that analyze a sample (for example, blood) sucked with a suction tube. In a sample analysis apparatus, after the suction tube is pierced through the lid of a container to suck a sample inside the container, it is raised up to inside a cleaning device located above to be cleaned. Then, the suction tube moves along with the cleaning device to a predetermined discharge position, and then descends from the cleaning device to discharge the sample into an analysis chamber. In this way, analysis of the sample (such as counting blood cells) is performed in the analysis chamber. For example, Patent Document 1 discloses one example of a cleaning device as described above.

### Citation List

### Patent Literature

Patent Document 1: JP-A-H6-222065

### Summary of Invention

### Technical Problem

If foreign matter (such as a blood clot) adheres to the upper face of the lid of the container, the foreign matter may adhere to the suction tube when, after suction of the sample with the suction tube, the suction tube is raised and taken out of the container. Then, when the suction tube is retracted into the cleaning device, the foreign matter mentioned above may adhere to the lower end face of the cleaning device. In particular, in a construction like that of the cleaning device of Patent Document 1 where a projection projecting downward is provided on the lower end face and the suction tube moves inside that projection, foreign matter may adhere to the outer circumferential face of the projection. Then, the foreign matter may fall into the analysis chamber and mix with the sample. That is, the foreign matter may adversely affect the analysis of the sample (as by lowering analysis accuracy).

Patent Document 1 does not discuss a measure to cope with foreign matter adhered to the cleaning device as mentioned above.

The present invention is devised to solve the above-mentioned problem and aims at providing a cleaning device, a sample analysis apparatus, and a cleaning method that can, even if foreign matter adheres to a suction tube after the suction of a sample and it adheres to the cleaning device as the suction tube moves, reduce the risk of the foreign matter adversely affecting the analysis of the sample.

### Solution to Problem

According to one aspect of the present invention, a cleaning device that cleans a suction portion includes: a first passage portion inside which a suction tube for sucking a sample moves; a first cleaning solution supply passage and a cleaning solution discharge passage that intersect with the first passage portion; a hollow body that connects to the first passage portion in the movement direction of the suction tube and that has a second passage portion inside which the suction tube moves; and a wall portion having an inner side face that surrounds the outer side face of the hollow body across a gap. The suction portion includes the suction tube and the hollow body. The wall portion has a second cleaning solution supply passage that penetrates the inner side face. The cleaning device cleans at least one of the suction tube and the hollow body.

According to another aspect of the present invention, a sample analysis apparatus includes the cleaning device described above, an analysis chamber for analyzing the sample, and the suction tube that sucks the sample and discharges it into the analysis chamber.

According to yet another aspect of the present invention, a cleaning method includes a retraction step of, after suction of a sample with a suction tube, retracting the suction tube into a first passage portion of a cleaning device via a second passage portion of a hollow body in the cleaning device; a first cleaning solution supply step of supplying a first cleaning solution from a first cleaning solution supply passage in the cleaning device to the first passage portion; a cleaning solution discharge step of discharging the first cleaning solution supplied to the first passage portion through a cleaning solution discharge passage in the cleaning device; and a second cleaning solution supply step of supplying a second cleaning solution from a second cleaning solution supply passage that penetrates an inner side face of a wall portion that surrounds the outer side face of the hollow body into a gap between an outer circumferential face of the hollow body and the inner side face.

### Advantageous Effects of Invention

According to the present invention, even if foreign matter adheres to a suction tube after the suction of a sample and it adheres to the cleaning device as the suction tube moves, it is possible to reduce the risk of foreign matter adversely affecting the analysis of a sample.

### Brief Description of Drawings

[Fig. 1] is a perspective view showing the exterior construction of a blood analysis apparatus according to one embodiment of the present invention.
[Fig. 2] is an illustrative diagram schematically showing the internal configuration of the blood analysis apparatus.
[Fig. 3] is a sectional view showing an outline of the structure of a cleaning device included in the blood analysis apparatus.
[Fig. 4] is a bottom view of a second cleaning portion of the cleaning device as seen from below.
[Fig. 5] is a flow chart showing the steps involved in the cleaning of a needle after the suction of blood.
[Fig. 6] is an illustrative diagram schematically showing a flow path in the cleaning device through which a first cleaning solution passes from a first cleaning solution supply passage to a cleaning solution discharge passage.
[Fig. 7] is an illustrative diagram schematically showing a flow path in the cleaning device through which a second cleaning solution passes.
[Fig. 8] is an illustrative diagram schematically showing a flow path in the cleaning device through which the first cleaning solution flows downward through the first and second flow passages.

### Description of Embodiments

An illustrative embodiment of the present invention will be described below with reference to the accompanying drawings. In the following description, blood (whole blood) is assumed as one example of a sample, and a blood analysis apparatus for analyzing blood is assumed as one example of a sample analysis apparatus.

### [ 1. Outline of a Blood Analysis Apparatus ]

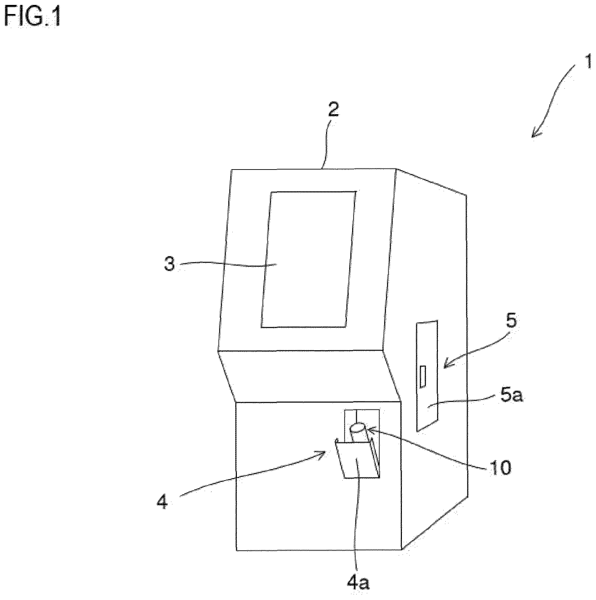

Fig. 1 is a perspective view showing the exterior construction of a blood analysis apparatus 1 according to the embodiment. The blood analysis apparatus 1 includes an information display portion 3 in an upper part of the front face of an apparatus body 2. The display portion 3 is configured with, for example, a liquid crystal display device with a touch panel, and displays the results of blood analysis and the like and also accepts the input of various kinds of information by an operator (e.g., a medical professional).

In a lower part of the apparatus body 2, a container loading portion 4 is provided. Opening a cover 4a of the container loading portion 4, then setting a container 10 holding a blood sample (hereinafter, referred to simply as blood) in it, and then closing the cover 4a permits the container 10 to be loaded in the apparatus body 2. The container 10 may be loaded in the apparatus body 2 with an adapter that suits the type of container 10 attached to it.

In a side part of the apparatus body 2, a reagent container loading portion 5 is provided. Opening a door 5a of the reagent container loading portion 5 permits refilling with a reagent (e.g., a reagent for immunoassay) used in blood analysis.

### [ 2. Internal Configuration of the Blood Analysis Apparatus ]

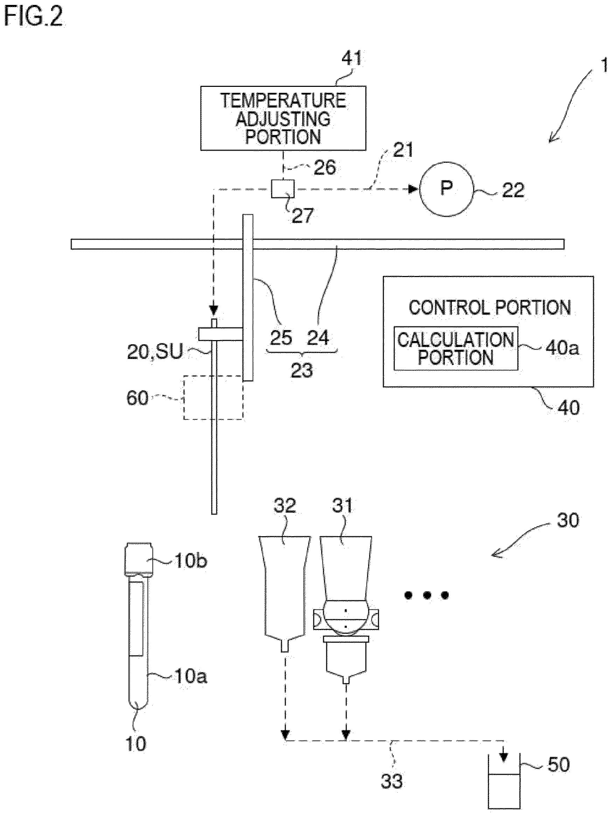

Fig. 2 is an illustrative diagram schematically showing the internal configuration of the blood analysis apparatus 1. The blood analysis apparatus 1 includes a needle 20, a blood analysis portion 30, and a control portion 40. The control portion 40 is configured with, for example, a central arithmetic processor (computer) generally called a CPU (central processing unit) and controls the operation of different parts in the blood analysis apparatus 1.

The needle 20 is a suction tube that sucks the sample (blood) from the container 10 and discharges the sucked sample into an analysis chamber 31, which will be described later. That is, the needle 20 sucks and discharges the blood contained in the container 10. The needle 20 is one example of a sucking portion SU that is a cleaning target of a cleaning device 60, described later.

Here, the container 10 is a container that permits blood to be collected (sampled) with a lid 10b fitted to a container body 10a, and it is also referred to as a vacuum blood collection tube. With the tip end of the needle 20 pierced into the lid 10b of the container 10, the blood inside can be sucked.

The base end of the needle 20 is connected to a quantitative syringe 22 via a first pipe 21 indicated by broken lines and an electromagnetic valve device (not shown). As the control portion 40 drives the quantitative syringe 22 and the electromagnetic valve device, the needle 20 sucks and discharges the blood.

The needle 20 is moved by a probe unit 23 (driving portion) in horizontal and vertical directions. The probe unit 23 is configured to include a horizontal moving mechanism 24 and a vertical moving mechanism 25. The horizontal moving mechanism 24 and the vertical moving mechanism 25 are, for example, configured with a feed screw mechanism. The feed screw mechanism rotates a feed screw with a stepping motor and thereby moves an engaging portion that engages with the feed screw in the horizontal or vertical direction. Coupling the vertical moving mechanism 25 with the engaging portion of the horizontal moving mechanism 24 and making the engaging portion of the vertical moving mechanism 25 hold the needle 20 permits the needle 20 to be moved in the horizontal and vertical directions.

The horizontal moving mechanism 24 and the vertical moving mechanism 25 may be configured to include, for example, an endless belt, driving and driven rollers that run the endless belt, and the like. As the control portion 40 drives the driving rollers in the horizontal and vertical moving mechanisms 24 and 25, the endless belt in the horizontal moving mechanism 24 runs in the horizontal direction, and the endless belt in the vertical moving mechanism 25 runs in the vertical direction. This permits the needle 20 supported on the vertical moving mechanism 25 to move in the horizontal and vertical directions.

The blood analysis portion 30 analyzes blood as by counting blood cells and performing immunoassay. The blood analysis portion 30 includes a chamber 31 (container) that receives the blood sucked from the container 10 and discharged into it with the needle 20. There are provided as many chambers 31 as the number of targets to be counted, such as red blood cells, white blood cells (including what is classified as white blood cells), CRP, etc.

Inside the chamber 31 for blood cell counting, a counting device is provided. The counting device can carry out, according to the type of blood cells to be counted, various measurement methods including those based on impedance, flow cytometry, and focused flow impedance. The control portion 40 can process the measurement data acquired in the counting device to create a frequency distribution or the like. Processing of the measurement data described above is performed in a calculation portion 40a included in the control portion 40. In this way, the blood analysis apparatus 1 includes a chamber 31 (analysis chamber) for analyzing a sample (blood). The counting device described above may be provided outside the chamber 31 and connected to the chamber 31.

Near the CRP measuring chamber, a plurality of reagent containers (not shown) are provided. The reagent containers contain a hemolytic reagent, a buffer solution, an antihuman CRP sensitized latex immunoassay reagent, and the like. In performing CRP measurement, the reagents are sucked from the reagent containers with the needle 20 with appropriate timing and are discharged into the chamber.

The blood analysis portion 30 further includes a cleaning chamber 32. During the cleaning of the needle 20 by the cleaning device 60, which will be described later, the cleaning chamber 32 receives cleaning solution dropping from above. When excess blood is discharged from the needle 20, the cleaning chamber 32 also receives it.

The cleaning device 60 is supported on the probe unit 23 and moves horizontally with the horizontal movement of the needle 20 driven by the probe unit 23. As the probe unit 23 is driven, the needle 20 moves vertically relative to the cleaning device 60.

To lower end parts of the chambers described above, that is, the analysis chamber (chamber 31) and the cleaning chamber 32, a discharge pipe 33 is connected as indicated by broken lines. The waste liquid in the chambers is, as a discharge portion (not shown) is driven, sent to a waste liquid container 50 via an electromagnetic valve device (not shown). The discharge portion is configured with a discharge syringe or a discharge pump.

When the container 10 containing blood is loaded in the container loading portion 4 (see Fig. 1) in the apparatus body 2, the control portion 40 drives the probe unit 23 to move the needle 20 in the horizontal and vertical directions. This permits the needle 20 to move into and out of each of the container 10, the chamber 31, and the reagent container. In addition, the control portion 40 can drive the quantitative syringe 22 to suck the blood or the reagent through the needle 20 or to discharge the blood or the reagent from the needle 20. Through such operations, blood analysis (blood cell counting and immunoassay) is performed in the blood analysis portion 30.

The blood analysis apparatus 1 further includes a temperature adjusting portion 41. The temperature adjusting portion 41 is connected to, for example, a second pipe 26 that branches off the first pipe 21. In a branch portion between the first pipe 21 and the second pipe 26, a switching valve 27 is provided to switch flow paths. The temperature adjusting portion 41 warms a diluent contained in a tank (also referred to as a buffer tank) with a heater wound around it. The warmed diluent flows into the first pipe 21 via the second pipe 26 and the switching valve 27, and is then discharged into the chamber 31 through the needle 20. Here, also the blood previously sucked from the container 10 with the needle 20 is discharged into the chamber 31 together with the warmed diluent. Thus, in the chamber 31, the discharged blood is warmed to a desired temperature by mixing with the warmed diluent. The temperature adjusting portion 41 may be configured to warm the blood in the chamber 31 by directly heating the chamber 31 with a heater or the like. By warming the blood to a desired temperature in this way, it is possible to prevent the coagulation of blood, which coagulates under cool or cold conditions.

### [ 3. Cleaning Device ]

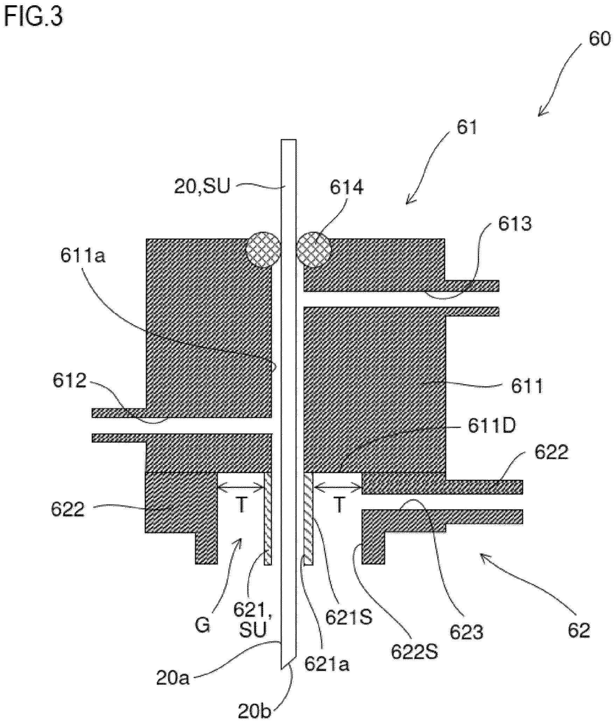

Next, the cleaning device 60 included in the blood analysis apparatus 1 of this embodiment will be described in detail. Fig. 3 is a sectional view showing an outline of the structure of the cleaning device 60. The cleaning device 60 is a device for cleaning the sucking portion SU and includes a first cleaning portion 61 and a second cleaning portion 62. The sucking portion SU, which is the cleaning target of the cleaning device 60, includes, in addition to the needle 20 described above, also a barrel 621, which will be described later. That is, the sucking portion SU includes the needle 20 and the barrel 621.

For convenience' sake, in the following description, the direction of movement of the needle 20 driven by the probe unit 23 (see Fig. 2) with respect to the cleaning device 60 is assumed to be the up-down direction. The direction in which the needle 20 moves toward the container 10 (see Fig. 2) for suction of blood is assumed to be "down(ward)", and the opposite direction (the direction away from the container 10) is assumed to be "up(ward)" .

The first and the second cleaning portions 61 and 62 are positioned one above the other. More specifically, the second cleaning portion 62 is positioned below the first cleaning portion 61. The first and second cleaning portions 61 and 62 may be integrally constructed, or they may be constructed with separate members bonded (coupled) together.

The first cleaning portion 61 includes a cleaning block 611, a first cleaning solution supply passage 612, and a cleaning solution discharge passage 613. The cleaning block 611 is a block that has a first passage portion 611a inside which the needle 20 moves. The first passage portion 611a has an inner diameter larger than the outer diameter of the needle 20 and is provided along the up-down direction. More specifically, the first passage portion 611a extends so as to penetrate the cleaning block 611 in the up-down direction. Thus, the first passage portion 611a is open at both its ends in the up-down direction. A seal member 614 is provided in an upper end part of the first passage portion 611a in the cleaning block 611. The seal member 614, while holding the needle 20, seals the upper end of the first passage portion 611a.

The first cleaning solution supply passage 612 and the cleaning solution discharge passage 613 connect to (intersect with) the first passage portion 611a at different positions in the cleaning block 611. More specifically, the first cleaning solution supply passage 612 is located below the cleaning solution discharge passage 613 in the cleaning block 611. The first cleaning solution supply passage 612 and the cleaning solution discharge passage 613 extend in a direction (for example, horizontal direction) crossing the up-down direction.

The first cleaning solution supply passage 612 is connected to a cleaning solution container (not shown). Thus, through the first cleaning solution supply passage 612 passes the cleaning solution (first cleaning solution) supplied from the cleaning solution container. Here, the cleaning solution container may be the buffer tank mentioned above. In this case, as the cleaning solution, the diluent stored in the buffer tank can be used. The cleaning solution is not limited to a diluent and may be any other liquid (such as water). The cleaning solution discharge passage 613 is connected to, for example, the waste liquid container 50 (see Fig. 2). The cleaning liquid (first cleaning liquid) discharged from the cleaning solution discharge passage 613 flows toward the waste liquid container 50.

The second cleaning portion 62 includes the barrel 621 and a wall portion 622. The barrel 621 is one example of a hollow body with a circular cross-sectional outline. As the hollow body, it is also possible to use a polygonal cylinder with a polygonal cross-sectional outline. The barrel 621 has a second passage portion 621a. The second passage portion 621a extends so as to penetrate the barrel 621 in the up-down direction. Thus, the second passage portion 621a is open at both its ends in the up-down direction.

The second passage portion 621a is connected to the first passage portion 611a of the first cleaning portion 61 in the up-down direction. The barrel 621 projects downward from a bottom face 611D of the cleaning block 611 of the first cleaning portion 61. That is, the barrel 621 extends along the up-down direction. The second passage portion 621a has an inner diameter larger than the outer diameter of the needle 20. The needle 20 moves inside the second passage portion 621a.

The barrel 621 is formed of metal such as SUS (stainless steel). That is, the barrel 621 includes metal. The barrel 621 is bonded to the bottom face 611D of the cleaning block 611. The barrel 621 may be press-fitted into a lower part of the cleaning block 611 so that the second passage portion 621a connects to the first passage portion 611a. The metal constituting the barrel 621 is not limited to SUS, but is preferably a metal that has corrosion resistance to the cleaning solution. The barrel 621 may be formed of resin.

The wall portion 622 is located on the same side as the barrel 621 with respect to the cleaning block 611 of the first cleaning portion 61, that is, below the cleaning block 611. The wall portion 622 has an inner side face 622S and a second cleaning solution supply passage 623. The inner side face 622S is located away, at a gap T, from an outer circumferential face 621S that constitutes the outer face of the barrel 621. More specifically, the inner side face 622S surrounds, across the gap T, the outer circumferential face 621S of the barrel 621. Thus, a groove G is formed around the outer circumferential face 621S of the barrel 621.

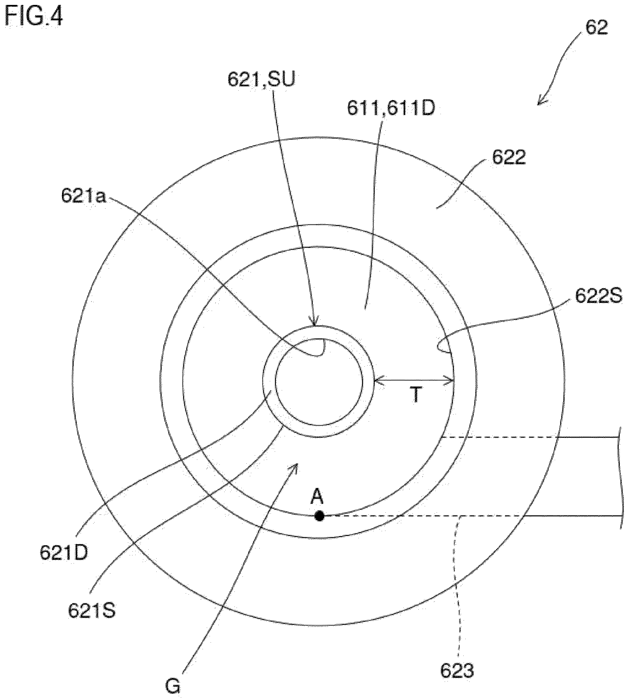

Fig. 4 is a bottom view of the second cleaning portion 62 as seen from below, that is, as seen from the side opposite from the first cleaning portion 61 (see Fig. 3). When the second cleaning portion 62 is viewed from below, the outer circumferential face 621S, which is the outer surface of the barrel 621, is circular, and also the inner side face 622S of the wall portion 622 is circular. However, the inner diameter of the inner side face 622S is larger than the outer diameter of the outer circumferential face 621S. The groove G mentioned above has its top face on the bottom face 611D of the cleaning block 611, has its side faces on the outer circumferential face 621S of the barrel 621 and the inner side face 622S of the wall portion 622, and is open downward; it is thus formed in an annular shape along the outer circumferential face 621S of the barrel 621.

As shown in Figs. 3 and 4, in the wall portion 622, the second cleaning solution supply passage 623 extends so as to penetrate the inner side face 622S. In the wall portion 622, the second cleaning solution supply passage 623 extends in a direction (for example, horizontal direction) intersecting with the up-down direction. In particular, as shown in Fig. 4, when the second cleaning portion 62 is viewed from below, the second cleaning solution supply passage 623 extends along a direction tangential at a point A to the inner side face 622S of the wall portion 622.

### [ 4. Suction of Blood and Cleaning of the Needle ]

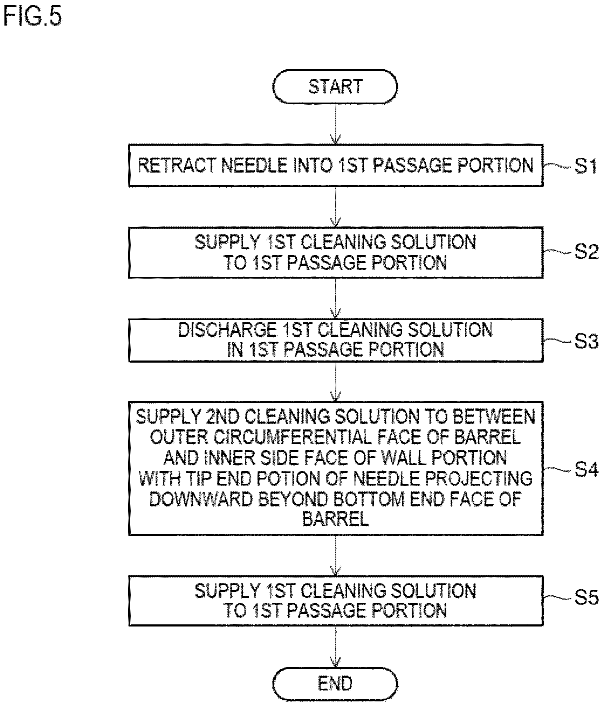

Next, the steps from the suction of blood by the needle 20 to the completion of the cleaning of the needle 20 will be described. Fig. 5 is a flow chart showing the steps involved in the cleaning of the needle 20 after the suction of blood.

First, the probe unit 23 is driven so that the needle 20 is moved from the state shown in Fig. 3 downward. With a tip end portion 20b of the needle 20 pierced through the lid 10b (see Fig. 2) of the container 10, the blood is sucked with the needle 20.

Then, the probe unit 23 is driven to move the needle 20 upward so that the needle 20 is taken out of the container 10 and retracted into the first passage portion 611a in the first cleaning portion 61 via the second passage portion 621a in the second cleaning portion 62 (S 1; retraction step). After the needle 20 is taken out of the container 10, the probe unit 23 is driven so that the needle 20 is moved horizontally together with the cleaning device 60 to above the cleaning chamber 32.

Then, a first cleaning solution (for example, diluent) is supplied from the first cleaning solution supply passage 612 to the first passage portion 611a (S2; first cleaning solution supply step). Thus, the first passage portion 611a is filled with the cleaning solution, and this permits an outer circumferential face 20a (see Fig. 3) of the needle 20 in the first passage portion 611a to be cleaned with the first cleaning solution. Supplying the first cleaning solution to the first passage portion 611a while retracting the needle 20 into the first passage portion 611a permits the outer circumferential face 20a of the needle 20 to be cleaned over a wide range in the up-down direction, and also permits the tip end portion 20b (see Fig. 3) of the needle 20 to be cleaned.

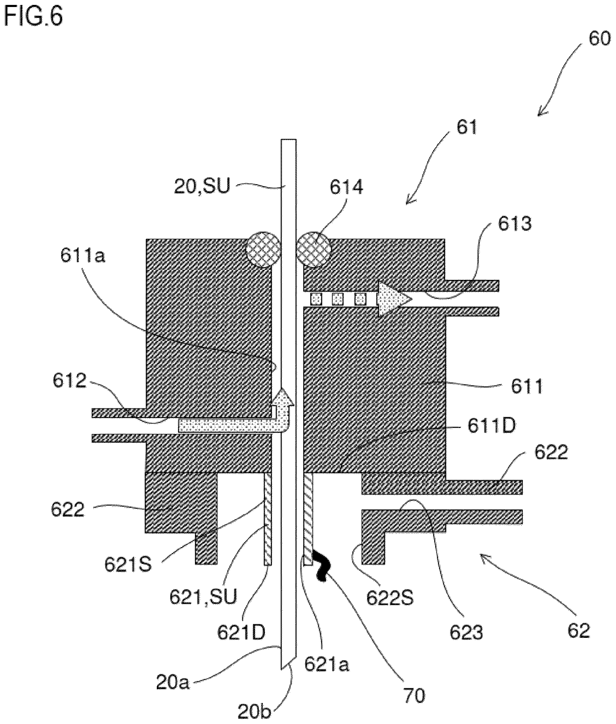

Concurrently with S2, the first cleaning solution supplied to the first passage portion 611a is discharged through the cleaning solution discharge passage 613 (S3; cleaning solution discharge step). This permits the soiled first cleaning solution used for cleaning the needle 20 in the first passage portion 611a to be discharged to the outside (for example, to the waste liquid container 50, see Fig. 2) via the cleaning solution discharge passage 613. Thus, it is possible to keep clean the first cleaning solution filling the first passage portion 611a. Fig. 6 schematically shows, with arrows, the flow path through which the first cleaning solution passes when S1 to S3 are performed in parallel.

In the cleaning block 611, the cleaning solution discharge passage 613 is located above the first cleaning solution supply passage 612; thus, the first cleaning solution supplied from the first cleaning solution supply passage 612 into the first passage portion 611a and soiled from cleaning flows into the cleaning solution discharge passage 613 above. In other words, the first cleaning solution soiled from cleaning is very unlikely to flow along the outer circumferential face 20a of the needle 20 downward to soil the outer circumferential face 20a.

Incidentally, if, after blood is sucked with the needle 20 from the containment container 10, foreign matter (such as a blood clot) adheres to the outer circumferential face 20a or the tip end potion 20b of the needle 20, in step S1 described above, the foreign matter may adhere to the outer circumferential face 621S of the barrel 621 of the second cleaning portion 62 when the needle 20 is retracted into the first passage portion 611a. Fig. 6 shows a state where foreign matter 70 has adhered to the outer circumferential face 621S of the barrel 621.

Thus, in this embodiment, in S1 to S3, after the needle 20 is cleaned in the first cleaning portion 61, the needle 20 is moved downward by the probe unit 23, so that the tip end potion 20b of the needle 20 projects downward beyond a bottom end face 621D of the barrel 621. In this state, a second cleaning solution is supplied into the gap T between the outer circumferential face 621S of the barrel 621 and the inner side face 622S of the wall portion 622 from the second cleaning solution supply passage 623 (S4; second cleaning solution supply step). In other words, the second cleaning solution is supplied from the second cleaning solution supply passage 623 into the groove G. The second cleaning solution may be the same cleaning solution as, or a different cleaning solution from, the first cleaning solution.

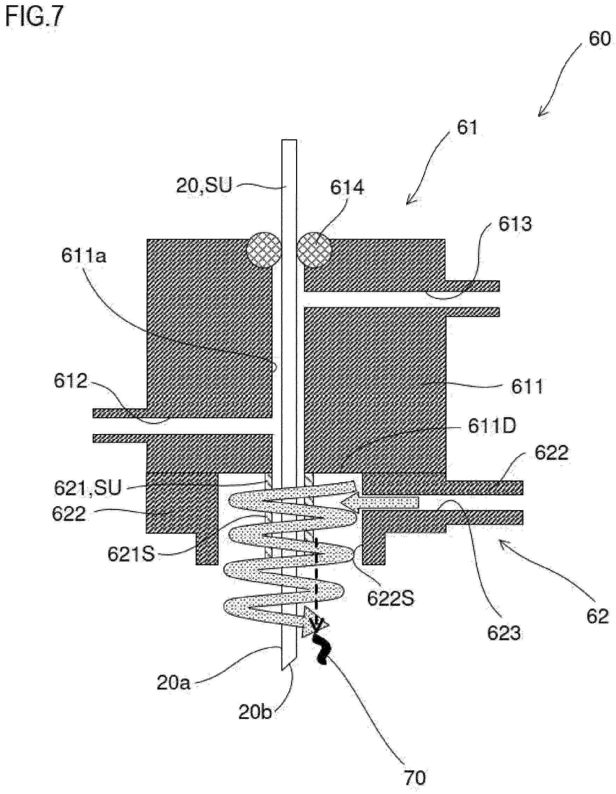

Fig. 7 schematically shows, with arrows, the path through which the second cleaning solution flows. With the supply of the second cleaning solution, foreign matter 70 adhering to the outer circumferential face 621S of the barrel 621 is removed by the second cleaning solution flowing through the groove G and drops downward with the second cleaning solution to be collected in the cleaning chamber 32. In particular, in this embodiment, since the second cleaning solution supply passage 623 extends in a tangential direction at the point A (see Fig. 4), the second cleaning solution supplied from the second cleaning solution supply passage 623 to the groove G flows while swirling in the groove G.

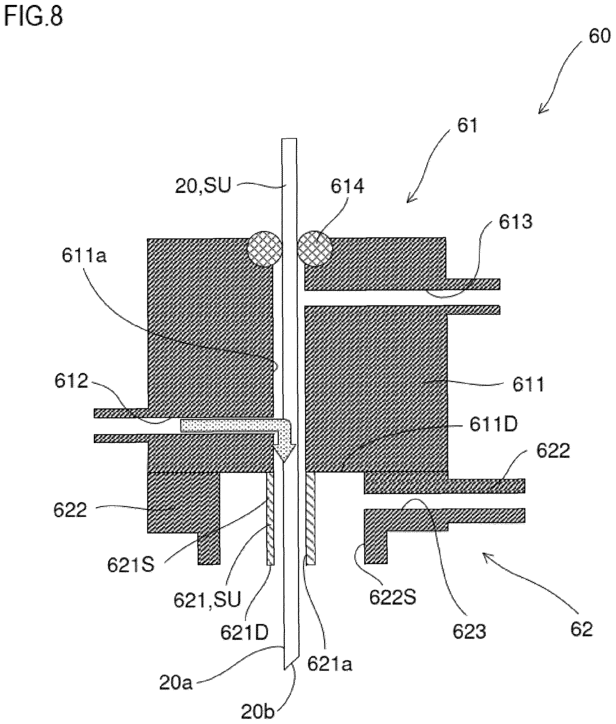

Finally, the first cleaning solution is supplied from the first cleaning solution supply passage 612 to the first passage portion 611a (S5; first cleaning solution re-supply step). At this time, the discharge of the first cleaning solution from the cleaning solution discharge passage 613 is stopped. Thus, the first cleaning solution supplied from the first cleaning solution supply passage 612 to the first passage portion 611a, as indicated by an arrow in Fig. 8, flows downward through the first passage portion 611a, then drops from the second passage portion 621a of the barrel 621 downward, and is then collected in the cleaning chamber 32.

With the construction of the cleaning device 60 and the cleaning method according to this embodiment, even if, after suction of blood, foreign matter 70 adheres to the needle 20 and it adheres to the outer circumferential face 621S of the barrel 621 of the second cleaning portion 62 when the needle 20 is retracted into the first passage portion 611a in the first cleaning portion 61, by supplying cleaning solution (second cleaning solution) to the gap T (groove G) from the second cleaning solution supply passage 623, it is possible to clean the outer circumferential face 621S of the barrel 621 and remove the foreign matter 70. Thus, it is possible to reduce the risk of foreign matter 70 adversely affecting subsequent blood analysis (as by lowering analysis accuracy).

As seen from below, that is, on the plane perpendicular to the movement direction of the needle 20, the outer circumferential face 621S of the barrel 621 is circular, and also the inner side face 622S of the wall portion 622 is circular. Thus, as shown in Fig. 4, the annular groove G is formed between the outer circumferential face 621S of the barrel 621 and the inner side face 622S of the wall portion 622. When the cleaning solution (second cleaning solution) is supplied from the second cleaning solution supply passage 623 to the annular groove G, the cleaning solution flows along the circumferential direction of the annular groove G. Thus, no matter where foreign matter 70 adheres to the outer circumferential face 621S of the barrel 621, it can be removed with the supply of the cleaning solution.

As described above, the cleaning solution supplied from the second cleaning solution supply passage 623 to the gap T (groove G) flows in the groove G while swirling (see Fig. 7). This swirling flow of the cleaning solution effectively removes foreign matter 70 adhering to the outer circumferential face 621S of the barrel 621. That is, by making the cleaning solution supplied to the gap T through the second cleaning solution supply passage 623 swirl around the outer circumferential face 621S of the barrel 621, it is possible to efficiently remove foreign matter 70 adhering to the outer circumferential face 621S of the barrel 621.

The barrel 621 includes metal. This ensures the mechanical strength of the barrel 621, and makes it possible to reduce the thickness of the barrel 621. For example, the thickness of the barrel 621 can be reduced down to about 0.2 to 0.3 mm. Thus, it is possible to reduce the area of the bottom end face 621D of the barrel 621 (the face that intersects with the outer circumferential face 621S of the barrel 621 and that is perpendicular to the movement direction of the needle 20) and thereby reduce the adhesion of foreign matter to the bottom end face 621D. Thus, it is possible to remove a large part of the foreign matter 70 adhering to the barrel 621 by cleaning the outer circumferential face 621S of the barrel 621, and this increases the efficiency of removing foreign matter 70.

The needle 20 used in this embodiment is a suction tube with a tip end potion 20b that can penetrate the lid 10b of the container 10. Such suction tubes are also called suction tubes of a single-pierce type. During sampling by sucking a sample (blood) from the container 10 using a suction tube of a single-pierce type, when the suction tube is taken out of the container 10, foreign matter 70 adhering to the top face of the lid 10b of the container 10 for some reason may adhere to the suction tube and, when the suction tube is retracted into the cleaning device 60, the foreign matter 70 may adhere to the outer circumferential face 621S of the barrel 621. Thus, the cleaning device 60 of this embodiment is highly effective when sampling is performed using such a suction tube of a single-pierce type.

The blood analysis apparatus 1 as the sample analysis apparatus of this embodiment includes the cleaning device 60 with the configuration described above, the analysis chamber 31 for analyzing a sample (e.g., blood), and the needle 20 for sucking the sample and discharging it into the chamber 31. Even if foreign matter 70 adheres to the cleaning device 60 (e.g., the outer circumferential face 621S of the barrel 621) after suction of a sample (sampling), the foreign matter 70 can be removed by the cleaning device 60; thus, it is possible to avoid a drop in the analysis accuracy of the blood analysis apparatus 1.

The blood analysis apparatus 1 of this embodiment includes the probe unit 23 as a driving portion to move the needle 20 (in the up-down direction) with respect to the first and second passage portions 611a and 621a of the cleaning device 60. This permits the outer circumferential face 20a and the tip end potion 20b of the needle 20 to be retracted into the first passage portion 611a so that the needle 20 is cleaned.

In the cleaning method of this embodiment, in the second cleaning solution supply step (S4), with the tip end potion 20b of the needle 20 projecting beyond the end face (bottom end face 621D), opposite from the first cleaning portion 61, of the barrel 621, the second cleaning solution is supplied to the gap T. In this case, the second cleaning solution drops downward into the cleaning chamber 32 from the outer circumferential face 621S of the barrel 621 along the outer circumferential face 20a of the needle 20. Thus, the second cleaning solution supplied to the gap T can be efficiently collected without it being scattered around.

### <5. Others>

While, in this embodiment, the cleaning of the needle 20 by the cleaning device 60 proceeds in the order of cleaning by the first cleaning portion 61 and cleaning by the second cleaning portion 62, it may instead proceed in the order of cleaning by the second cleaning portion 62 and cleaning by the first cleaning portion 61; or cleaning by the first and second cleaning portions 61 and 62 may proceed concurrently.

While, in Fig. 7, cleaning is performed with the tip end potion 20b of the needle 20 projecting downward beyond the bottom end face 621D of the barrel 621, cleaning does not necessarily need to be performed with the tip end potion 20b projecting. That is, a configuration is also possible where, through the retraction step for the needle 20 or the like, not both of the barrel 621 and the needle 20 (the suction portion) are cleaned (for example, only the outer circumferential face 621S of the barrel 621 is cleaned).

While the above embodiment deals with an example where the suction tube of a single-pierce type is used as the needle 20, the cleaning device 60 of this embodiment can also be applied to, for example, the cleaning of a suction tube of a double-needle type.

Although the above embodiment deals with an example of using as the container 10 a container of a closed type with the lid 10b fitted to the container body 10a, also when a container 10 of an open type that is loaded in the blood analysis apparatus 1 with no lid is used, blood is sampled from the container 10 with the needle 20, and the needle 20 is soiled, cleaning the needle 20 with the cleaning device 60 of the embodiment helps reduce the risk of a drop in analytical accuracy.

While the embodiment described above deals with an example where blood is used as the sample, the sample can be anything other than blood. For example, the sample can be any of body fluids such as plasma, serum, saliva, urine, lymphatic fluid, and cerebrospinal fluid. The cleaning device 60 described in this embodiment can be applied also to devices for analyzing samples like plasma.

The description of embodiments of the present invention given above is in no way meant to limit the invention, and various modifications are possible without departing from the spirit of the present invention.

### Industrial Applicability

The present invention finds applications in, for example, sample analysis apparatuses such as blood analysis apparatuses.

### Reference Signs List

- 1: blood analysis apparatus (sample analysis apparatus)
- 10: container
- 10b: lid
- 20: needle (suction portion, suction tube)
- 20a: outer circumferential face
- 20b: tip end portion
- 23: probe unit (driving portion)
- 31: chamber (analysis chamber)
- 60: cleaning device
- 61: first cleaning portion
- 611: cleaning block
- 611a: first passage portion
- 612: first cleaning solution supply passage
- 613: cleaning solution discharge passage
- 62: second cleaning portion
- 621: barrel (suction portion, hollow body)
- 621a: second passage portion
- 621S: outer circumferential face (outer surface)
- 622: wall portion
- 622S: inner side face
- 623: second cleaning solution supply passage
- A: point
- T: gap
- SU: suction portion

## Claims

1. A cleaning device that cleans a suction portion, comprising:
a first passage portion inside which a suction tube for sucking a sample moves;
a first cleaning solution supply passage and a cleaning solution discharge passage that intersect with the first passage portion;
a hollow body that connects to the first passage portion in a movement direction of the suction tube, the hollow body having a second passage portion inside which the suction tube moves; and
a wall portion having an inner side face that surrounds an outer side face of the hollow body across a gap,
wherein
the suction portion includes the suction tube and the hollow body,
the wall portion has a second cleaning solution supply passage that penetrates the inner side face, and
the cleaning device cleans at least one of the suction tube and the hollow body.

2. The cleaning device according to claim 1,
wherein
a cleaning solution supplied to the gap through the second cleaning solution supply passage is made into a swirling flow that swirls around the outer side face of the hollow body.

3. The cleaning device according to claim 1 or 2,
wherein
on a plane perpendicular to the movement direction of the suction tube,
the outer side face of the hollow body is circular, and
the inner side face of the wall portion is circular.

4. The cleaning device according to claim 3,
wherein
on a plane perpendicular to the movement direction of the suction tube, the second cleaning solution supply passage extends along a direction tangential at a point to the inner side face of the wall portion.

5. The cleaning device according to any one of claims 1 to 4,
wherein
the hollow body includes metal.

6. The cleaning device according to any one of claims 1 to 5,
wherein
the suction tube includes a tip end portion that can penetrate a lid of a container that stores the sample.

7. A sample analysis apparatus comprising:
the cleaning device according to any one of claims 1 to 6;
an analysis chamber for analyzing the sample; and
the suction tube that sucks the sample and discharges the sample into the analysis chamber.

8. The sample analysis apparatus according to claim 7, further comprising a driving portion that moves the suction tube with respect to the first and second passage portions of the cleaning device.

9. A cleaning method comprising:
a retraction step of, after suction of a sample with a suction tube, retracting the suction tube into a first passage portion of a cleaning device via a second passage portion of a hollow body in the cleaning device;
a first cleaning solution supply step of supplying a first cleaning solution from a first cleaning solution supply passage in the cleaning device to the first passage portion;
a cleaning solution discharge step of discharging the first cleaning solution supplied to the first passage portion through a cleaning solution discharge passage in the cleaning device; and
a second cleaning solution supply step of supplying a second cleaning solution from a second cleaning solution supply passage that penetrates an inner side face of a wall portion that surrounds the outer side face of the hollow body into a gap between an outer circumferential face of the hollow body and the inner side face.

10. The cleaning method according to claim 9,
wherein
in the second cleaning solution supply step, with a tip end potion of the suction tube projecting beyond an end face of the hollow body, the second cleaning solution is supplied to the gap.
